# EUROPEAN PATENT SPECIFICATION

(11) **EP 2 032 334 B1**
(45) Date of publication and mention of the grant of the patent: **22.09.2010**
(21) Application number: 07786777.8
(22) Date of filing: 20.06.2007
(51) Int. Cl.: B29C 49/00, C08L 23/10, A61J 1/00

(54) **LOW MELT FLOW RESINS FOR MEDICAL APPLICATIONS IN INJECTION-STRETCH-BLOW-MOULDING**
HARZE MIT NIEDRIGEM SCHMELZINDEX FÜR MEDIZINISCHE ANWENDUNGEN BEIM SPRITZSTRECKBLASFORMEN
RÉSINES À BAS POINT DE FUSION POUR INJECTION SOUFFLAGE BIÉTIRAGE DANS DES APPLICATIONS MÉDICALES

(30) Priority: 21.06.2006 EP 06115770
(43) Date of publication of application: 11.03.2009
(73) Proprietor: TOTAL PETROCHEMICALS RESEARCH FELUY, 7181 Seneffe (Feluy) (BE)
(72) Inventor: DURANEL, Laurent, B-1400 Nivelles (BE); HUMBEECK, Emmanuel, B-7181 Feluy (BE)
(86) International application number: PCT/EP2007/056131
(87) International publication number: WO 2007/147846

(56) References cited:
- EP-A- 1 026 199
- EP-A1- 0 764 514
- EP-A2- 0 251 340
- WO-A-99/41293
- WO-A-2006/018777
- US-A- 4 048 409
- US-A1- 2005 161 866

## Description

The present invention relates to the preparation medical vials with low melt flow polypropylene resins by one-stage injection-stretch-blow-moulding (ISBM).

EP-A-151741 to Mitsui discloses single-stage manufacturing of articles by ISBM. These articles are prepared from propylene-ethylene random copolymers having a melt flow index of from 4 to 50 dg/min and containing a nucleating agent. The injection moulding temperature is of from 200 to 260 °C and all examples have been carried out with an injection moulding temperature of 220 °C.

WO95/11791 to Bekum is directed to a two-stage process for preparing articles by ISBM. The preferred resin is an ethylene-propylene copolymer containing more than 50 wt% of propylene and having a melt index of from 10 to 20 dg/min. The injection cavity fill rate is of from 3 to 5 grams per second and the injection temperature is of about 210 °C.

WO05/074428 to Milliken discloses a two-stage process for preparing articles by ISBM. The resin is a polypropylene composition having a melt flow index of from 6 to 50 dg/min, preferably from 13 to 35 dg/min prepared by any method known in the art. The mould fill rate is larger than 5 grams per second and the preform articles have sidewalls having a maximum thickness of less than 3.5 mm. The injection temperatures cited in the examples are of 230 and 240 °C.

WO99/41293 to BASF discloses the use of metallocene-produced homo- or copolymers of propylene in ISBM. The range of melt indexes is broadly defined from 0.1 to 1000 dg/min and the injection temperature is of from 200 to 280 °C. The polydispersity index of metallocene-prepared polypropylene is very narrow.

WO 2006/018777 discloses a process for producing clear injection stretch blow moulded containers comprising:
I. moulding a propylene polymer composition comprising:
   (A) a propylene polymer chosen from:
      (i) a homopolymer or minirandom copolymer of propylene containing up to 1.0 wt % of at least one of ethylene and C₄-C₁₀ α-olefins, having an isotactic index greater than about 80 wt%;
      (ii) a random copolymer of propylene and at least one olefin chosen from ethylene and C₄-C₁₀ α-olefins, containing about 0.3 to about 30 wt% of said olefin, and having an isotactic index greater than about 60 wt%; and
      (iii) mixtures thereof,
      the propylene polymer having a melt flow rate of from about 1 to about 50; and
   (B) about 1 to about 1000 ppm, based on the weight of the propylene polymer, of at least one radiant heat absorbent that absorbs infrared radiation having a radiation wavelength of from about 700 to about 25,000 nm.
   thereby forming a preform; and
II. stretch blow moulding the preform;
wherein in step II, heat is supplied by infrared radiation, and the containers have a haze value less than 25.0%.

EP-A-0251340 discloses a therapeutic container obtained by injection stretch blow moulding a random copolymer of propylene and ethylene having a melt flow index of 4 to 20 g/10 min and an ethylene content in the range from 1 to 6 wt%.

EP-A-0764514 discloses a stretch blow moulding process for the preparation of polypropylene containers wherein use is made, as the polypropylene material, of a crystalline propylene copolymer containing from 4 to 12 % by weight of one or more C₄-C₈ α-olefins.

EP-A-1026199 discloses a package comprising a wall which comprises a polymer composition, wherein the polymer composition comprises at least 10 % by weight of a syndiotactic polypropylene and has a flexural modulus in the range of from 100 to 1000 MPa. It further discloses a process for the production of a moulded article, which comprises introducing a polymer composition comprising a syndiotactic polypropylene into an injection moulding cavity which is at a first temperature in the range from 90 to 120°C to form a preform; transferring the preform to a blow-mould cavity which is at a second temperature in the range 10 to 80C; and blow-moulding this preform to form a moulded article.

None of these resins produce articles having an ideal balance of properties.

It is an aim of the present invention to produce medical vials by one-stage injection-stretch-blow-moulding.

It is another aim of the present invention to provide a method that uses low melt flow polypropylene resins for preparing preforms for injection-stretch-blow-moulding in order to prepare medical vials having excellent optical properties after bi-orientation.

It is also an aim of the present invention to produce medical vials having good thickness distribution.

It is a further aim of the present invention to produce medical vials having good stacking properties.

It is yet another aim of the present invention to produce medical vials having excellent drop test, especially at low temperature.

Any one of these aims is fulfilled, at least partially, by the present invention.

Accordingly, the present invention provides a method for preparing according to independent claim 1.

The melt flow index MI2 is measured following the method of standard test ISO 1133 under a load of 2.16 kg and at a temperature of 230 °C.

Preferably, the polypropylene resin used in the present invention is prepared with a Ziegler-Natta (ZN) catalyst system. ZN catalyst systems inherently produce polymers having a broad polydispersity index. The polydispersity index is defined as the ratio Mw/Mn of the weight average molecular weight Mw over the number average molecular weight Mn. Molecular weights are measured by Gel Permeation Chromatography (GPC). Ziegler-Natta catalyst system typically produce polymers having a polydispersity index of at least 6. For sake of clarity, it is repeated that metallocene and single-site catalysts are not ZN catalysts.

The resin is a random copolymer of propylene. The preferred comonomer is ethylene and the amount of ethylene present in the resin is of at most 3.5 wt%, preferably at most 3 wt%. The preferred minimum is of 1 wt%.

The melt index is of at most 3 dg/min. The preferred minimum MI2 is of 1.5 dg/min; the preferred maximum MI2 is of 2.5 dg/min, more preferably of 2 dg/min.

This type of low melt flow resin is generally not used in one-stageinjection-stretch-blow-moulding applications and theinjection-stretch-blow-moulding conditions are thus adapted to work with that resin.

The resin may additionally contain up to 5000 ppm of nucleating agent Preferably, if present, the nucleating agent is used in an amount of from 200 to 2500 ppm.

Other additives typically employed in the field may be added, such as antioxidants or antistatic.

In addition the present resin is one of the few resins accepted for medical applications. When the invention is used to prepare medical vials, nucleating agents must be selected among those that are accepted in medical applications, such as talc and sodium benzoate. More preferably, there is no nucleating agent. Other additives allowed in medical applications such as for example those described in European Pharmacopoeia §3.1.6 may be added.

The injection temperature of the preforms is of at least 210 °C, preferably of at least 220 °C and more preferably of at least 230 °C.

The injection temperature is preferably increased for low melt index resin in order to avoid excessive stress. Increasing the injection temperature allows to increase the injection rate without increasing the stress.

At a specified injection temperature, the mould filling rate over gate diameterratio is of at most 10 cc/s/mm, preferably 6 cc/s/mm. Preferably it has a minimum value of 3 cc/s/mm. The gate diameters that are typically used in the field are of from 2 to 4 mm, preferably this invention uses gate diameters of from 2.8 to 4 mm.

The injection-stretch-blow-moulding can be carried out either in a two-stage process carried out on two separate machines (cold cycle), or in a single-stage process carried out on a single machine (hot cycle). In the present invention, the one-stage process is used: all steps are carried out in the same machine.

Injection stretch blow moulding comprises the steps of:
- providing a pre-form by injection moulding on a multi-cavity mould;
- optionally slightly re-heating the pre-form;
- optionally, passing the heated pre-form through an equilibration zone to allow the heat to disperse evenly through the pre-form wall;
- optionally, submitting the preform to a pre-blow step;
- stretching the pre-form axially by a centre rod;
- orienting the stretched pre-form radially by high pressure air.

Preferably, the re-heating step is carried out in a reflective radiant heat oven or in front of an adequate source of heat, like an air knife, following a pre-determined temperature profile adapted to the pre-form.

In this process, the stretching step is critical: it requires homogeneous heating of the pre-form and thus optimisation of the pre-form.

The pre-blow pressure is generally of from 4 to 10 bars, preferably of from 6 to 8 bars. The stretching is then typically carried out under a blowing pressure of from 5 to 40 bars, preferably of from 8 to 30 bars, according to preform wall thickness. The stretch rod speed is of from 1000 to 2000 mm/s, preferably of from 1400 to 1800 mm/s and most preferably of about 1600 mm/s. The stretch rod diameter depends upon the size of the preform. The best results for material distribution in the finished article are obtained when the rod diameter is about 2/3 of that of the preform. For example, for a preform having a diameter of 25 mm, the preferred rod diameter is of about 16 mm.

Improved impact strength vials with superior stiffness and transparency are particularly adapted for medical applications. The bottle prepared by the method of the present invention can advantageously replace standard glass bottle, saving weight and energy for its production and transportation. Furthermore, in line optical control of the solution contained into the medical vials can readily be applied due to the glass-clear quality of the containers produced by the present process. In addition the new bottles are safer than conventional polypropylene blow moulded bottles container because they are produced without the welding line at the vial's bottom, typical of blow moulding process, that can lead to formation of leaks and thus require careful quality control. Indeed polypropylene resins have poor welding properties because of their high melt temperature.

The medical vials prepared with the preforms of the present invention have remarkable optical properties: they have an excellent transparency throughout their whole body or at least throughout most of their body. In addition they have good wall thickness distribution, excellent drop test and very good top load and stacking properties. They also have a number of desirable properties such as for example low water vapour permeability, good squeezability, and excellent heat resistance allowing for example hot filling, microwave heating or sterilisation.

## Claims

1. A method for preparing vials by one-stage injection-stretch-blow-moulding with a random copolymer of propylene and ethylene (RCP) having a melt index of from 1 to 3 dg/min, ethylene content of from 1 wt% to 3.5 wt% with respect to the weight of the RCP and prepared with a Ziegler-natta catalyst system, wherein the preform injection temperature is of at least 210 °C and wherein the mould filling rate over gate diameter ratio is of at most 10 cc/s/mm.

2. The method of claim 1 wherein the preform injection temperature is of at least 220 °C.

3. The method of claim 1 or claim 2 wherein the melt index is of from 1.5 to 2.5 dg/min.

## Patentansprüche

1. Verfahren zur Herstellung von Phiolen durch einstufiges Spritzstreckblasformen mit einem statistischen Copolymer von Propylen und Ethylen (RCP) mit einem Schmelzindex von 1 bis 3 dg/min, einem Ethylengehalt von 1 Gew.% bis 3, 5 Gew.% bezogen auf das Gewicht des RCP und hergestellt mit einem Ziegler-Natta-Katalysatorsystem,
wobei die Vorformspritztemperatur mindestens 210 °C beträgt und wobei das Verhältnis Formfüllgeschwindigkeit zu Angussdurchmesser mindestens 10 cm³/s/mm beträgt.

2. Verfahren nach Anspruch 1, wobei die Vorformspritztemperatur mindestens 220 °C beträgt.

3. Verfahren nach Anspruch 1 oder 2, wobei der Schmelzindex 1,5 bis 2,5 dg/min beträgt.

## Revendications

1. Procédé de préparation de flacons par moulage par injection-étirage-soufflage à une étape avec un copolymère statistique de propylène et éthylène (RCP) ayant un indice de fusion de 1 à 3 dg/min, une teneur en éthylène de 1 % en poids à 3,5 % en poids par rapport au poids du RCP et préparé avec un système de catalyseur de Ziegler-natta, où la température d'injection de préforme est d'au moins 210 °C et où le rapport vitesse de remplissage de moule sur diamètre de grille est d'au plus 10 cm'/s/mm.

2. Procédé selon la revendication 1, dans lequel la température d'injection de préforme est d'au moins 220 °C.

3. Procédé selon la revendication 1 ou la revendication 2, dans lequel l'indice de fusion est de 1,5 à 2,5 dg/min.
